# EUROPEAN PATENT SPECIFICATION

(11) **EP 0 790 578 B1**
(45) Date of publication and mention of the grant of the patent: **05.04.2000**
(21) Application number: 97106457.1
(22) Date of filing: 10.01.1991
(51) Int. Cl.: G06T 1/00, G06T 3/00, H04N 5/262

(54) **Geometric area overlap detector for use in digital video image processing**
Vorrichtung zur Erkennung der Überlappung geometrischer Flächen, zum Einsatz in der digitalen Videobildverarbeitung
Détecteur pour l'identification d'un recouvrement entre surfaces géométriques, utilisable dans le traitement d'images vidéo numériques

(30) Priority: 12.01.1990 GB 9000674
(43) Date of publication of application: 20.08.1997
(62) Divisional of application: 91902726.8
(73) Proprietor: QUESTECH LIMITED, Wokingham Berkshire RG11 2PP (GB)
(72) Inventor: Billing, Robert, Crowthorne, Berkshire RG11 7JR (GB); Barton, Nicholas, Wokingham, Berkshire RE11 4VZ (GB)
(74) Representative: Bubb, Antony John Allen

(56) References cited:
- EP-A- 0 198 630
- WO-A-90/03703
- GB-A- 2 215 552

## Description

This invention relates to a data processing device for use in the processing of digital video image signals.

In particular, the invention concerns a device that may form a component of a digital video effects apparatus such as that described in EP-A-0509043 corresponding to Patent Application EP 91 902 726.8 from which the present Application is divided.

In the above mentioned parent Patent Application, and also in other documents, such as WO-A-90/03703, there is described a system for processing two dimensional co-ordinate signals that have been transformed, in order to derive intermediate values of transformed signals to a resolution greater than that provided by the original signal.

Such a system is capable, for example, of filling gaps or holes that would appear at the co-ordinates in a final picture because the spacing between co-ordinates in a transformed signal is greater than that of the pixels in the image to be displayed.

Such a system requires that the signal to be processed be divided into subsets of signals defining geometric areas of the video image frame, which subsets can be processed individually by corresponding elements of the system.

It will be appreciated that when an image is transformed, the coordinates of the transformed image will not necessarily correspond to the co-ordinates of positions in the television screen on which the image is to be displayed, and thus time can be saved by avoiding processing of image areas defined by such subsets of co-ordinate signals that lie entirely off the image screen.

It is accordingly an object of the present invention to provide a device, hereinafter referred to as a 'detector', for identifying image areas defined by such subsets of signals that lie entirely off an image screen.

The invention accordingly provides a data processing device comprising means for comparing signals defining the co-ordinate positions of corners of a geometric area with respective boundaries of a predetermined image frame, in order to provide output signals determining the presence or absence of each corresponding co-ordinate position within said image frame in a given co-ordinate direction, and means for logically combining said output signals to provide a corresponding control signal only when the said geometric area lies wholly outside said predetermined image frame.

The invention is illustrated by way of example in the accompanying drawings, in which:

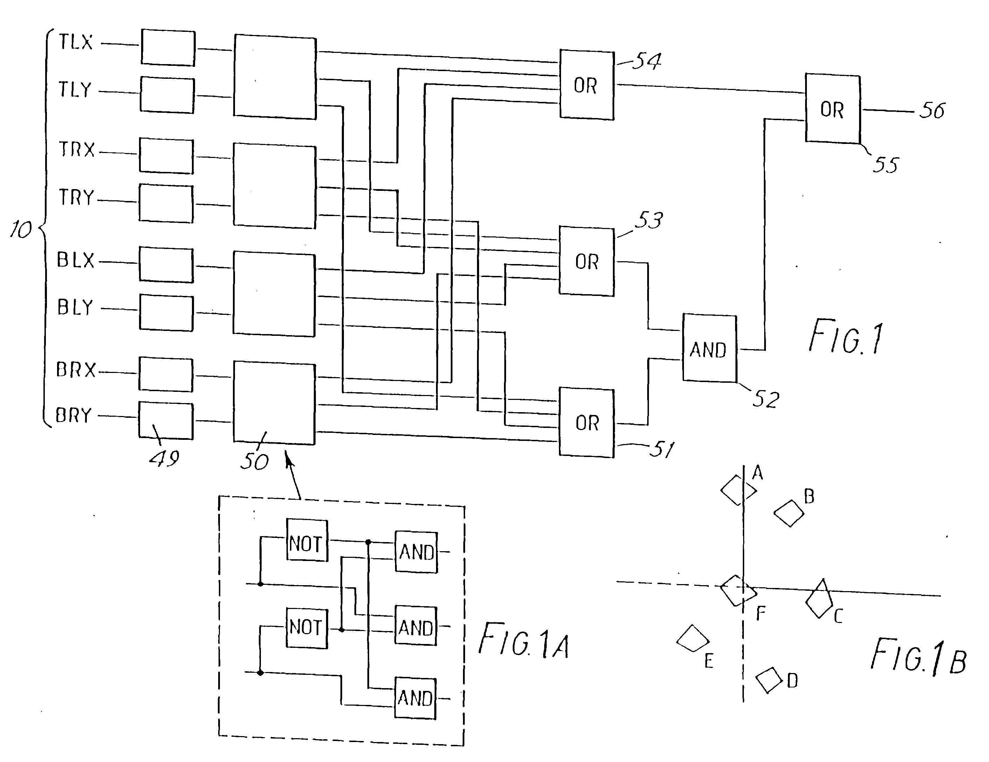

Figure 1 is a circuit diagram of a detector according to the invention,
Figure 1A illustrates a detail of Fig. 1, and
Figure 1B is a diagram illustrating the operation of the circuit.

Referring to Fig. 1, the detector is used to identify geometric image areas (referred to as big pixels) which lie entirely off screen. When such a pixel is detected it turns off an associated image processing section, saving the time that it would have taken.

In the arrangement of the detector shown in Fig. 1, the co-ordinates TLY TLY, TRX TRY, BLX BLY, BRX BRY, of corners of a big pixel are sent to the comparators 49 which have an output which is logically true if its input lies outside a range of values which represent the available screen height or width. The comparator outputs go to the blocks 50, the internal arrangement of each of which is shown in Fig. 7A. The outputs are then combined by the gates 51 to 55 to produce the signal 56 which is true if the big pixel lies wholly or partly within the screen.

The way in which the detector works is as follows. The output of gate 51 is true if any corner is off screen in the Y direction but not in the X, 53 if any corner is off screen in the X direction but not in the Y, and 54 if any corner is on screen in both directions.

Fig. 1B shows the bottom left hand corner of the screen and a few possible positions for the big pixel. Positions A, B and C have at least one corner completely on the screen, and hence the output of gate 54 and the output of the detector is true for them. Position D is on screen in the X direction, but off screen in the Y hence the output of gate 51 is true, but the outputs of gates 53 and 54 are false, so the output is false. For position E the outputs of all gates are false. For position F however, despite the fact that all corners are off screen, the outputs of both gates 51 and 53 are true so the output is true.

This scheme will detect and mark as on screen all big pixels that are even partly on screen, including difficult cases such as F.

## Claims

1. A data processing device, comprising means (49) for comparing signals (TLX TLY, TRX TRY, BLX BLY, BRX BRY) defining the co-ordinate positions of corners of a geometric area, with respective boundaries of a predetermined image frame, in order to provide output signals determining the presence or absence of each corresponding co-ordinate position within said image frame in a given co-ordinate direction, and means (50-55) for logically combining said output signals to provide a corresponding control signal (56) only when the said geometric area lies wholly outside said predetermined image frame.

2. A device according to Claim 1, wherein said geometric area is a quadrilateral figure and said predetermined image frame comprises the frame defined by a video raster.

## Patentansprüche

1. Datenverarbeitungsvorrichtung, versehen mit einer Anordnung (49) zum Vergleichen von Signalen (TLX TLY, TRX TRY, BLX BLY, BRX BRY), welche die Koordinaten-Positionen von Ecken einer geometrischen Fläche sind, mit diesbezüglichen Begrenzungen eines vorbestimmten Teilbildes, um Ausgangssignale zur Bestimmung der Anwesenheit oder Abwesenheit jeder entsprechenden Koordinaten-Position innerhalb des Teilbildes in einer vorgegebenen Koordinaten-Richtung bereitzustellen, und einer Anordnung (50 bis 55) zum logischen Kombinieren der Ausgangssignale, um ein entsprechendes Steuersignal (56) nur dann bereitzustellen, wenn die geometrische Fläche völlig außerhalb des vorbestimmten Teilbildes liegt.

2. Vorrichtung nach Anspruch 1, bei welcher die geometrische Fläche eine vierseitige Figur ist und das vorbestimmte Teilbild ein von einem Videoraster bestimmtes Teilbild ist.

## Revendications

1. Dispositif de traitement de données, comprenant un moyen (49) pour comparer des signaux (TLX TLY, TRX TRY, BLX BLY, BRX BRY) définissant les coordonnées des positions des coins d'une surface géométrique, avec des frontières respectives d'une trame d'image prédéterminée, afin de délivrer des signaux de sortie déterminant la présence ou l'absence de chaque coordonnées de position correspondante à l'intérieur de ladite trame d'image dans une direction de coordonnées donnée, et des moyens (50 à 55) pour combiner logiquement lesdits signaux de sortie pour délivrer un signal de commande correspondant (56) seulement lorsque ladite surface géométrique se trouve entièrement à l'extérieur de trame d'image prédéterminée.

2. Dispositif selon la revendication 1, dans lequel ladite surface géométrique est un quadrilatère et ladite trame d'image prédéterminée comprend la trame définie par un balayage tramé vidéo.
